# EUROPEAN PATENT SPECIFICATION

(11) **EP 2 190 698 B1**
(45) Date of publication and mention of the grant of the patent: **22.01.2014**
(21) Application number: 08795496.2
(22) Date of filing: 21.08.2008
(51) Int. Cl.: B60R 21/16

(54) **KNEE AIRBAG MODULE**
KNIE-AIRBAGMODUL
MODULE DE COUSSIN DE SÉCURITÉ GONFLABLE POUR GENOU

(30) Priority: 27.08.2007 US 968227 P
(43) Date of publication of application: 02.06.2010
(73) Proprietor: Key Safety Systems, Inc., Sterling Heights, MI 48314 (US)
(72) Inventor: FORD, Brian, Mount Clemns, MI 48043 (US); BUSACCA, Thomas, Shelby Township, MI 48316-2539 (US)
(74) Representative: Gislon, Gabriele
(86) International application number: PCT/US2008/009961
(87) International publication number: WO 2009/029203

(56) References cited:
- EP-A2- 1 283 136
- EP-A2- 1 481 856
- DE-U1- 29 807 424
- FR-A1- 2 824 029
- JP-A- 07 205 750
- JP-A- 2005 239 054
- US-A- 4 290 627
- US-A1- 2005 006 880
- US-A1- 2005 057 030

## Description

The present invention relates to a knee airbag module for a motor vehicle.

EP1283136 discloses a leg protection device in which an air bag is inflated and deployed along the bottom portion of the instrument panel. The air bag is composed of a front panel disposed on an occupant side, and a rear panel disposed on the opposite side. The front panel and the rear panel are substantially rectangular panels, and are sewn together with a sewing thread in a state in which tucked portions are created in the front panel. Because of the tucked portions, when the air bag is inflated, the front panel extends farther than the rear panel in the longitudinal direction, and the rear panel is curved concavely.

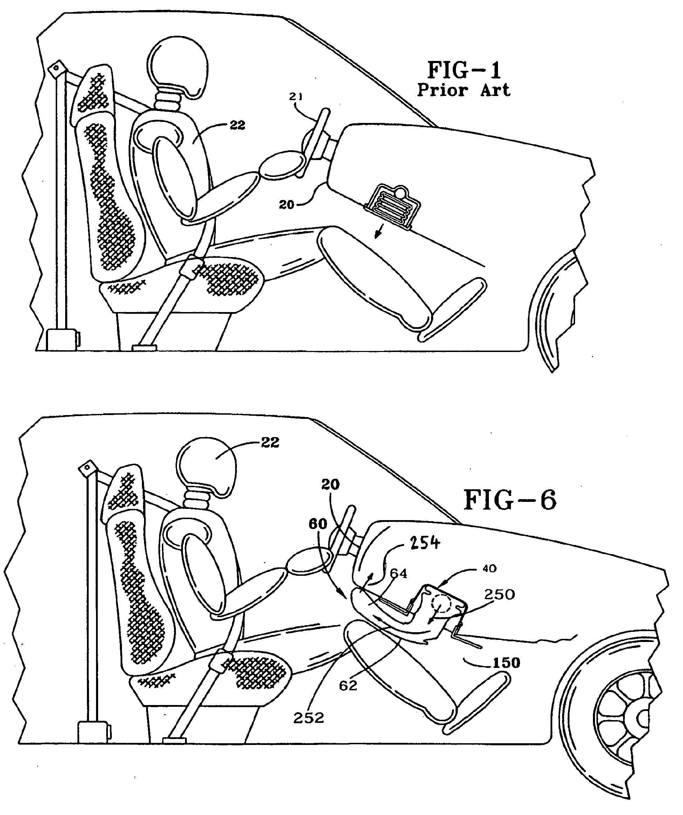

Figure 1 shows a typical mounting location for a knee airbag and knee airbag module 40. Knee airbag modules are most often located in the lower regions of the instrument panel 20 of a vehicle typically below the steering wheel 21. A knee airbag generates a blocking force on the lower leg of the vehicle occupant 22 to prevent the vehicle occupant from moving forward and below the instrument panel during a crash.

The present invention provides an improved knee airbag module wherein the knee airbag is deployed in an improved manner that facilitates the protection of the legs of a vehicle occupant.
Figure 1 shows the mounting orientation and location of a prior art knee airbag module.
Figure 2 shows the major components of a knee airbag module according to the present invention.
Figure 2a shows an airbag inflator usable with the present invention, partially broken away.
Figures 2b and 2c show a front and rear panel of a knee airbag according to the present Invention.
Figures 2d and 2e show a housing of the knee airbag module.
Figure 3 is a view of the underside of a cover.
Figure 3a is a view of the top side of the cover.
Figure 4 shows an assembly step in which the airbag Inflator is inserted in the housing.
Figure 4a shows another assembly step in which the narrow end of an initiator inserted in an opening in the housing.
Figure 4b is substantially the same as Figure 4a and shows a press washer of Figure 4a fixing an end of the airbag inflator to the housing.
Figure 4c shows an assembled knee airbag module with the cover secured to the housing.
Figure 4d is a cross-section of the assembled knee airbag module.
Figure 5 shows the major components of a knee airbag of the present invention.
Figure 5a shows the main panel of the airbag with reinforcement panels secured thereto.
Figure 5b shows a partially assembled airbag.
Figure 5c shows the airbag of Figure 5b after another process step.
Figure 5d shows the airbag after an additional process step.
Figures 5e and 5f are sectional views of the complete airbag.
Figures 5g and 5h show an alternate embodiment of a knee airbag.
Figure 6 shows the knee airbag inflated and located between the instrument panel of the vehicle and the legs of the vehicle occupant.
Figures 7a - 7c show another embodiment of a knee bag according to the present invention.
Figure 8 shows an alternate embodiment of an airbag inflator and housing according to the present invention.

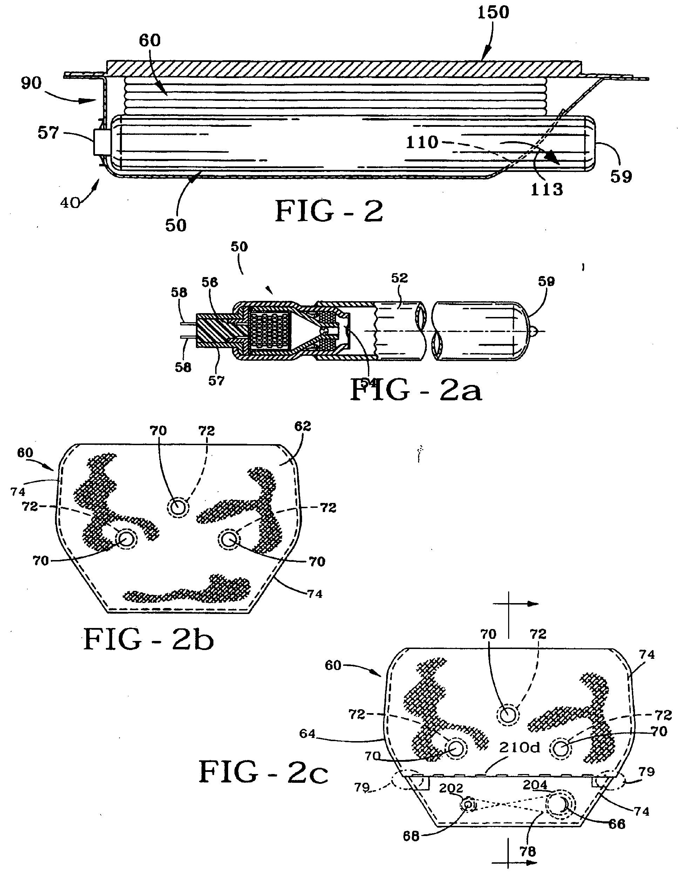

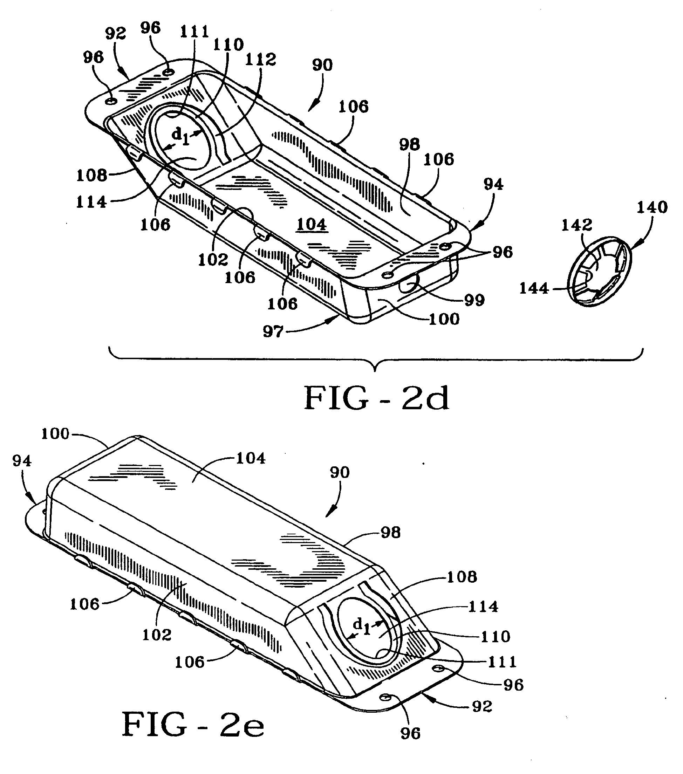

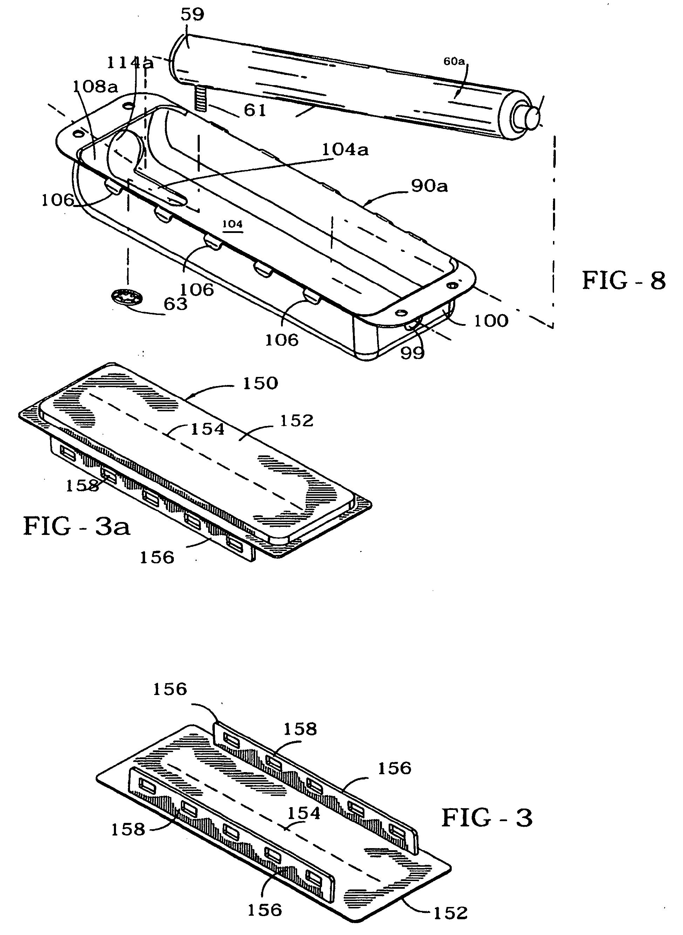

Figure 2 is a side view of an assembled knee airbag module 40 according to the present invention. The major components of a knee airbag module 40 include an airbag inflator 50, a knee airbag 60, a housing 90 and cover 150 which are shown in Figures 2a -2e as well as in Figure 3a. The knee airbag module 40 includes a press washer 140 which is shown over-sized in Figure2d. Many different airbag inflators can be used with the present invention. The illustrated airbag inflator 50 is a stored cold gas inflator; however, a pyrotechnic, hybrid or other type of airbag inflator can also be used. The airbag inflator 50 includes a burst disc 54 that is opened by an igniter 56. Activation signals are communicated to the airbag inflator through electric terminals 58, which are located at a first end 57 of the airbag inflator; the airbag inflator includes an opposite second end 59.
Figure 2b shows a front panel 62 of the knee airbag 60, while Figure 2c shows the rear panel 64 of the knee airbag.

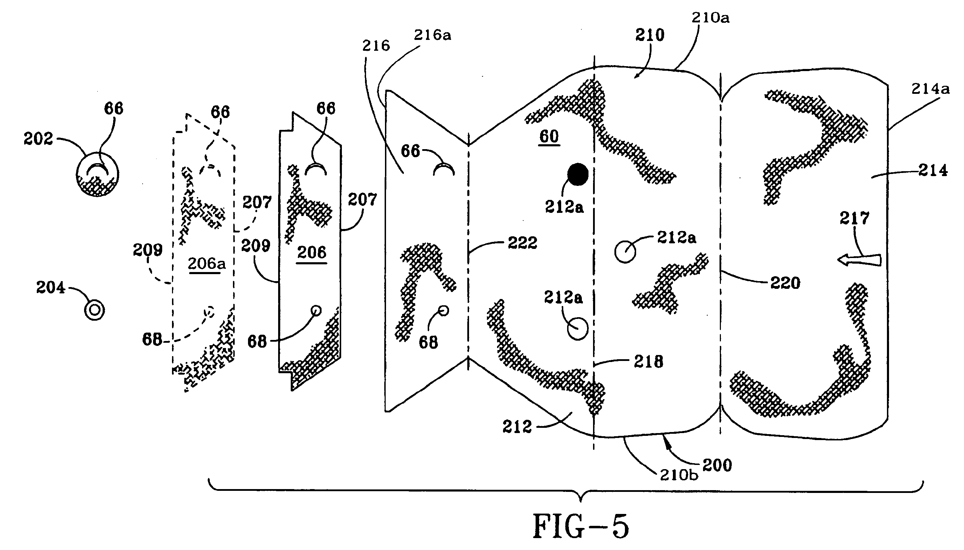

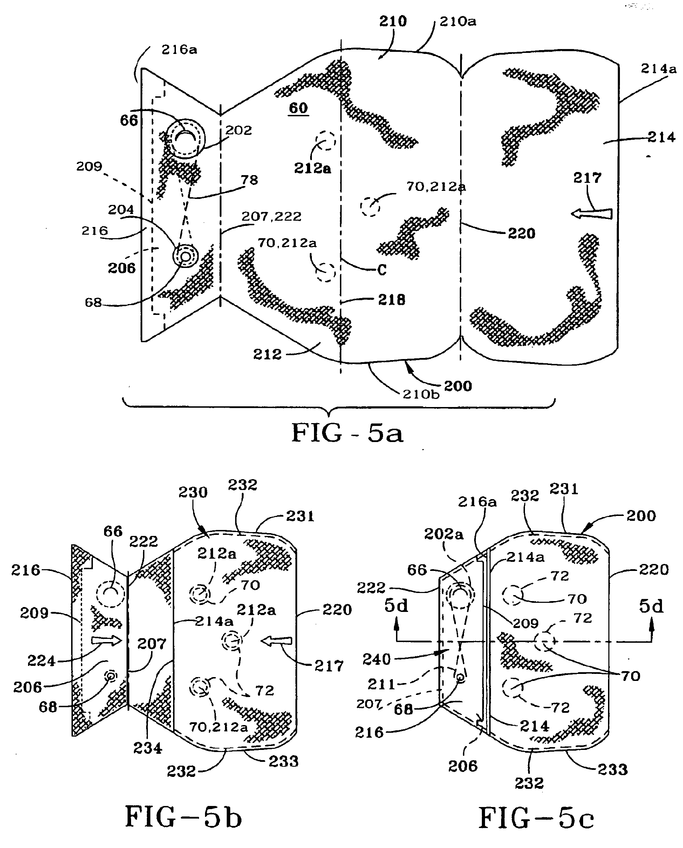

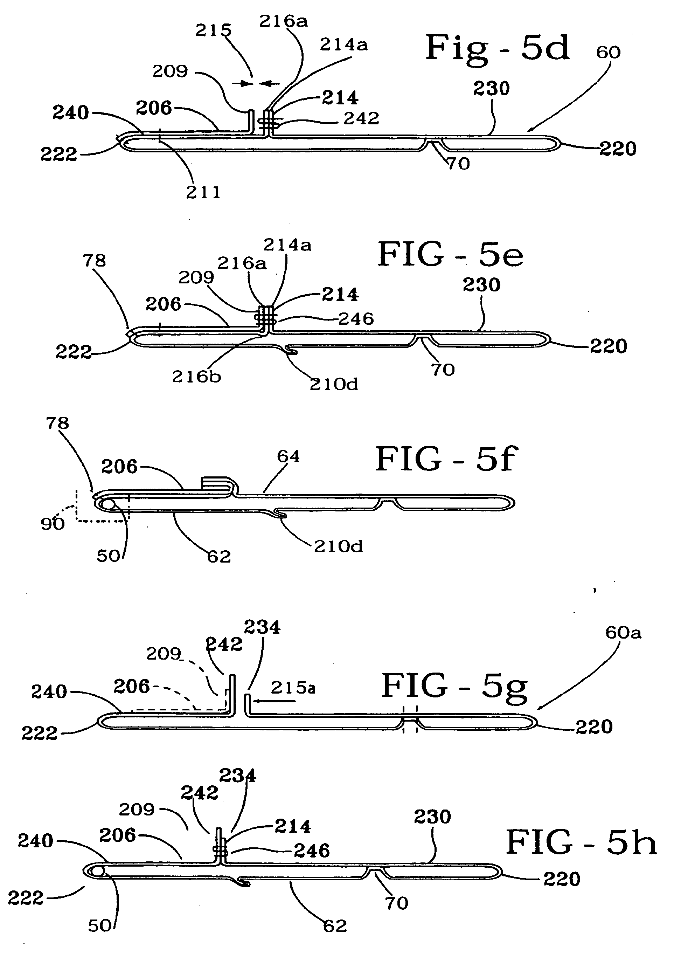

The knee airbag 60 in the illustrated embodiment has a main panel 200 divided into a center portion 210 and two side portions 214, 216 as shown in Figure 5. When the knee airbag is assembled, the center portion 210 of the main panel forms the front panel 62 and the two side portions 214, 216 when it is sewn to the center portion form the rear panel 64. When the knee airbag is inflated the front panel 62 bears against the legs of the vehicle occupant while the rear panel bears against the lower portions of the instrument panel. The rear panel 64 includes an arcuate slit 66 as well as an opening 68. The first end 57 of the airbag inflator is first inserted into the slit 66. The body 52 of the airbag inflator is also pushed through the slit 66. Thereafter the first end 57 of the airbag inflator is manipulated so it extends out of the opening 68. With the first end 57 of the airbag inflator in this position the second end 59 of the airbag inflator will extend from the slit 66. The knee airbag 60 may include one or more reinforcement panels 202, 204 that can be located below the slit 66 and opening 68 to reinforce the region of the knee airbag about the slit and opening. The reinforcement panels 202, 204 are shown in Figure 5. A first seam 78 in the shape of a figure eight is placed about the slit 66 and opening 68 to secure the reinforcement panels 202, 204 to the main panel 200 of the knee airbag. The knee airbag 60 includes a number of other regions 70 in which the front and rear panels 62, 64 of the knee airbag are joined together at a plurality of seams 72. The seams 72 can be formed by heat welding or by sewing. These seams prevent the knee airbag from taking on a more spherical shape upon inflation and give the knee airbag 60 a relatively narrow profile as it inflates. In Figures 2 and 2a the seams are shown as circular but they can take any shape required to control the shape of the inflated knee airbag.

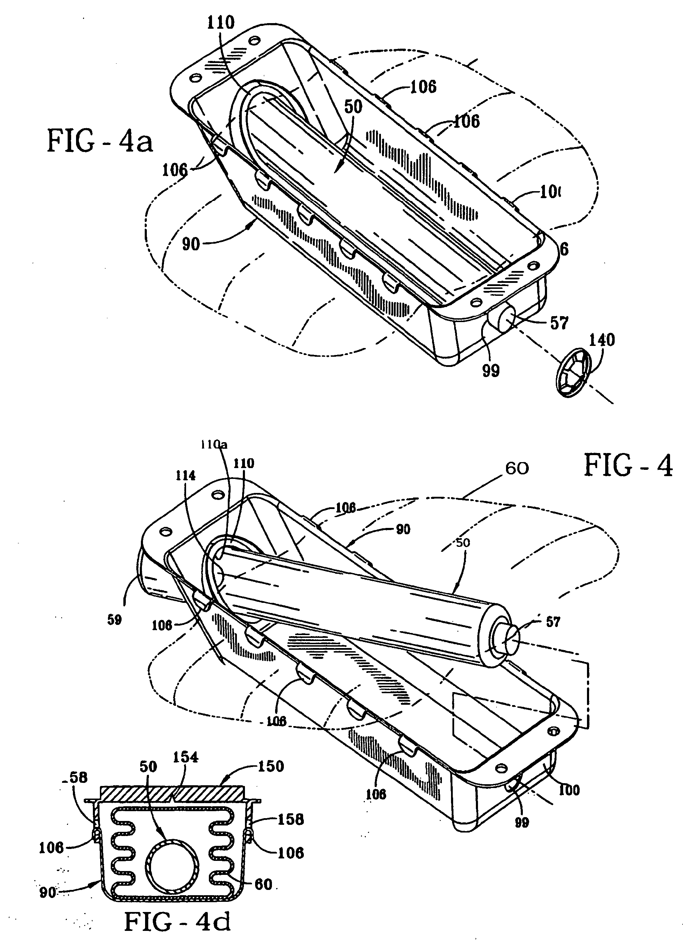

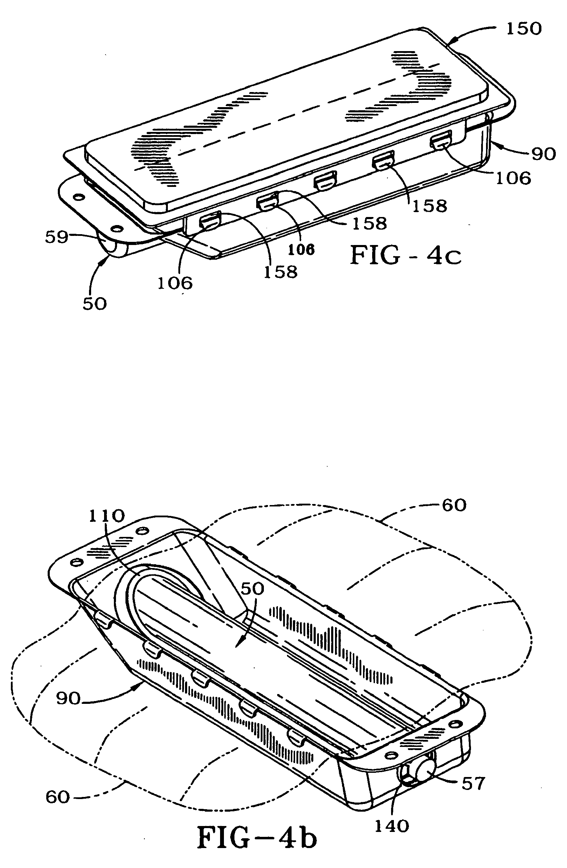

The housing 90, shown in Figures 2d and 2e, is typically made from a metal stamping but can be cast metal or plastic. An alternate housing 90a and airbag inflator 60a are shown in Figure 8. The housing 90 includes two extending mounting flanges 92, 94 each having a plurality of mounting openings 96. The housing is formed in the shape of a trough 97 having four sides 98, 100, 102, 108. Three of the sides 98, 100, 102 are perpendicular to a bottom 104 of the housing. Two of the sides 98, 100 include a plurality of outwardly extending tabs 106, which secure a cover 150 to the housing as shown in Figure 4c. One of the sides 108 extends outwardly at an angle between the bottom 104 of the housing and one of the mounting flanges 92 and includes a deformable member 110. The deformable member 110 is defined by a thin bendable and resilient loop of metal 111 separated from adjacent portions of the housing 90 by a narrow slit 112. The deformable member 110 has an oval opening 114, the minor diameter d1 of which is substantially equal to the diameter of the body 52 of the airbag inflator 50 and of sufficient size to receive the body of the airbag inflator in a press-fit manner. This enables the inflator body to be inserted into the opening 114 and held by the sides of the deformable member 110. The knee airbag module 40 includes a press washer 140 typically manufactured as a metal stamping with a central opening 142 and a plurality of radial slots 144. The press washer is received about and secures the first end 57 of the airbag inflator from moving relative to the housing 90. If the first end of the airbag inflator is threaded a threaded washer can replace the press washer.

Figures 3, 3a and 4c are various views of a cover 150. The cover 150 is manufactured of molded plastic and includes a top 152 and a tearable seem 154, which may be visible or invisible when viewed from a top side of the cover. The cover 150 is urged outwardly by the inflating knee airbag and will separate into two halves. The cover 150 includes two depending flanges 156 extending from an underside of the top 152. Each flange includes a set of rectangular openings 158. Figure 4c shows the cover secured to the housing 90 and more shows the tabs 106 extending through the openings 158.

Figure 4 shows the combination of the airbag inflator 50 and knee airbag 60 being assembled to the housing 90. After the airbag inflator 50 is inserted into the knee airbag, both ends 57, 59 of the airbag inflator extend from a respective slit 66 or opening 68 of the knee airbag. For the purpose of illustration in Figures 4, 4a and 4b the knee airbag is diagrammatically illustrated. In Figure 4, the second end 59 of the airbag inflator which extends from the knee airbag 60 has been inserted into the opening 114. In this assembly step the second end 59 of the airbag inflator is elevated relative to the housing 90. In Figure 4a the airbag inflator 50 and the knee airbag to which it is attached, have been rotated downward from the position shown in Figure 4, to a horizontal orientation in the housing 90 and the knee airbag is not yet folded. Subsequently the first end 57 of the airbag inflator is aligned with an opening 99 in a side 100 of the housing and slid rearward to and through the opening 99, permitting the terminal end 57 of the airbag inflator 50 to extend out of the opening 99. Thereafter the press washer 140 is secured about the first end 57 of the inflator to achieve the configuration illustrated in Figure 4b. The knee airbag 60 is diagrammatically illustrated in Figure 4b with portions of the knee airbag 60 extending from and about the airbag inflator and these portions of the knee airbag are also positioned in and about the housing. Subsequently, the knee airbag is folded or rolled into a compact configuration as illustrated in Figure 4d and the cover 150 is secured to the housing to complete the assembly of the knee airbag module as shown in Figures 4c and 4d. A cover for the knee airbag can be secured to the lower portions of the instrument panel instead of being fastened to the housing.

As shown in Figure 4, the airbag inflator, after it is inserted in the knee airbag, is initially inserted within the opening 114 of the deformable member 110 and then subsequently rotated downwardly to enable the first end 57 of the airbag inflator to be inserted in the opening 99. As the airbag inflator is rotating downwardly, the airbag inflator 50 will engage the top portion 110a of the deformable member 110 and bend the deformable member 110 as the airbag inflator is moved from the position as illustrated in Figure 4a. The deformable member 110, which is part of the housing 90, acts as a spring applying a bias force (see arrow 113) to the body of the airbag inflator. With the airbag inflator positioned through the opening 99 in the housing the deformable member 110 continues to apply bias force securing the airbag inflator in the housing. The deformable member 110, as illustrated in Figures 2 and 4b, securely holds the airbag inflator 50 to the housing 90 by the restoring force 113, shown in Figure 2, generated by the deformable member on the inflator body and by virtue of the press-fit attachment achieved between the inflator body and the deformable member 110.

Figure 8 shows an alternate housing 90a and the airbag inflator 50a. The airbag inflator 50a differs from the airbag inflator 50 by the addition of a stud 61 that has been attached to the inflator body by welding or other means. The stud 61 as illustrated is metal and threaded but can be smooth. The housing 90a has a side 108a that extends from bottom 104 in a perpendicular manner similar to side 100 of the previous embodiment. The side 108a includes an opening 114a dimensioned to permit the second end 59 of the airbag inflator to be slid therethrough. The bottom 104 includes an open groove 104a that intersects an opening 114a. After the airbag inflator 50a is inserted into the knee airbag 60, the knee airbag and airbag inflator are manipulated so the second end 59 of the airbag inflator, as well as a stud 61, extend from the slit 66. The inflator end 59 is inserted into an opening 114a. As the airbag inflator 50a is moved into the housing 90a the stud 61 enters into a groove 104a. In this manner, the airbag inflator can be pushed through the opening 114a permitting the first end 57 of the airbag inflator to clear the side 100. Thereafter, the first end 57 of the airbag inflator is aligned with the opening 99 and the airbag inflator 50a is slid toward the side 100 permitting the first end 57 of the airbag inflator to extend through the opening 99. As the airbag inflator is moved the stud 61 is repositioned within the groove 104a. The airbag inflator 50a is secured to the housing 90a by a threaded nut 63 which is attached to the stud 61. If the stud has smooth walls a press washer can be substituted for the threaded nut 63. If needed a press washer 140 can be placed about the first end 57 of the airbag inflator to further secure the airbag inflator 50a to the housing. The knee airbag 60 is folded about the airbag inflator 50a in the manner described above.

Figure 5 shows the major components of a knee airbag 60. The knee airbag 60 includes a main panel 200 and reinforcement panels that reinforce the main panel 200 in the vicinity of the split 66 and opening 68. A reinforcement panel 202 is used to reinforce the inflator receiving split 66 and reinforcement panels 204 is used to reinforce the area of the knee airbag about the slit 66 and opening 68. If added reinforcement is needed two or more of reinforcement panels 202, 204 can be stacked on each other. The reinforcement panel or panels 202 include another slit 66 while the reinforcement panel or panels 204 include another opening 68. The knee airbag may include additional panels 206, 206a. For the purpose of illustration these panels are the same size and shape. An additional panel 206a is shown in phantom line to indicate this may be an optional panel for the embodiment of Figure 5. The additional panels 206, 206a can be used as additional reinforcement to supplement the reinforcement panels 202, 204 or one or both of the additional panels 206, 206a can be used to replace the reinforcement panels 202, 204. If used, the additional panel 206a can be placed within the knee airbag 60 and functions as a heat shield. An additional panel 206 can be placed on an outside surface of the knee airbag and acts as a tether that controls the position of portions of the rear panel 64. Each reinforcement panel 206, 206a includes the necessary slit 66 or opening 68. It is not necessary for any slit 66 or opening 68 to be pre-formed in a reinforcement panel, each slit 66 and opening 68 can be formed through these panels by cutting, laser forming or by using other similar techniques after or during assembly.

The main panel 200 includes a center portion 210 and side portions 214, 216 formed on respective side of fold lines 220, 222. The center portion includes lateral sides 210a, 210b. Each side portions includes a respective end 214a, 216a. The main panel 200 has a centerline 218. For the purpose of illustration the various reinforcement panels are shown adjacent to the end 216a of the side portion 216 of the main panel 200 in Figure 5. Fold lines 220, 222 are also superimposed on the main panel 200. As a manufacturing aid a plurality of circles 212a are drawn, printed or stamped upon the main panel 200. Since the main panel 200 is made of a woven fabric, the manufacturing aids will be visible even if placed on what will become an interior surface of the main panel 200. The manufacturing aids identify the locations 70 where the panels can be joined together, as well as the location of a plurality of seams 72. The manufacturing aids such as the circles 212a can be filled in or shown by a line which highlights the outline of the circle as shown, with both versions shown in Figure 5.

In Figure 5a the main panel of the knee airbag is positioned with its interior surface visible. A reinforcement panel 206, which functions as a tether, has been positioned upon an outside surface of the main panel 200 with an edge 207 close to or coincident with a fold line 222. The opposing edge 209 of the reinforcement panel 206 is spaced from a corresponding edge 216a of the main panel. In Figures 5a and 5b the reinforcement panel 206, and additional panel 206a if used, and the other reinforcement panels 202, 204 have been secured to the main panel by the figure eight pattern sewn seam 78. The sewn seam 78 also has circular portions 213 surrounding the slit(s) 66 and opening(s) 68. In this embodiment the circular seamed portion 213 holds the reinforcement panel(s) to the inside of the main panel. The reinforcement panels 202, 204 are also shown in Figure 5a. In the preferred embodiment of this knee airbag, a reinforcement panel 204 is not needed and the curved slit 66 and opening 68 are formed after reinforcement panels are secured to the inside surface of the main panel 202 and are laser-cut.

During another step of assembly of the knee airbag 60 a side portion 214 is moved in the direction of arrow 217, which is to the left as viewed in Figure 5, and folded over a fold line 220 yielding the configuration shown in Figure 5b. The folded-over the side portion 214 is secured to the main panel 200 in three regions 70 in which the front and rear panels 62, 64 of the knee airbag are joined together by three circular seams 78 at the location of the manufacturing aids 212a. By securing the side 214 to the main panel 200 at three locations the two panels will lay on each other in a substantially flat manner at least between the regions 70 in which the front and rear panels 62, 64 of the knee airbag are joined together and the edge seam 74. The edge seams 74 aid in keeping these panels flat. The edge seams are also shown in Figures 2b and 2c. The manufacturing aids 212a are not shown in Figure 5b. At this point in the assembly process the exposed edge 214a of the side portion 214 of the main panel 200 is unsecured. The edges 231, 233 of the center portion 210 and side portion 214 are not yet secured. The side portion 216 including the reinforcement panels 202, 204, 206 and/or 206a, which were previously attached to the side portion 216, is moved in the direction of arrow 224 and folded over fold line 222 to achieve the configuration shown in Figure 5c. In this configuration the side portions 214, 216, as well as the ends 214a, 216a, lie opposite one another. At this stage of assembly an edge 216a of the side portion 216 is unsecured and the side portion 216 is not yet sewn to the center portion 210.

Figure 5d is a cross-sectional view at section line 5d-5d of Figure 2 in which the panel ends 214a, 216a are secured together by a seam 246. The edge 209 of reinforcement panel 206, which functions as a tether, is unsecured and is shown in a raised position spaced away from the joined-together ends 214a, 216a.

The edges 214a, 216a of the side portions 214, 216 are moved together placing the ends 214a, 216a adjacent one another and then these ends are sewn together at a seam 242. The sewn together ends of the side portions 214, 216, as well as an end 209 of the reinforcement panel 206, which functions as a tether, are moved relative to each other, and an end 209 of the tether 206 is sewn to the two side portions 214, 216 at a seam 246. As the spacing between the end 209 of the reinforcement panel 206, which functions as a tether, and the joined-together tether ends 214a, 216a narrows as indicated by arrows 215, a region 216b of loose fabric of the side portion 216 will lie loosely or pleat. This loose fabric 216b will extend across the width of the knee airbag along the mated ends 214a, 216a, 207. The outside end of this loose fabric is also shown in the assembled knee airbag of Figure 2a by numeral 79. To facilitate assembly, seams 242, 246 may be replaced by a single seam 246 which connects each of the three ends together in one operation. The relative movement of the panel portions and tether panel also creates some slack 210d in the center portion 210 of the main panel. The sewn together ends 209, 214a, 216a are folded down along the periphery of the knee airbag and the side portions 214, 216 are sewn to the center portion 210 at the peripheral seam 74. Figure 5f shows the ends 207, 214a, 216a bent down and laid on the tether panel, also the airbag inflator 50 is shown in the knee airbag 60.

The airbag inflator is inserted first through the slit 66 and manipulated so the first end 57 of the airbag inflator passes through the opening 68. Thereafter this subcombination of the airbag inflator 50 and assembled knee airbag 60 is placed into the housing 90 and the airbag inflator is manipulated in a manner as described above. Figure 5f shows the housing 90 superimposed upon the knee airbag to indicate the relative position of the parts of the main panel prior to folding the knee airbag. Upon inflation the center portion 210 of the front panel 62 is pressed against the legs of the vehicle occupant as shown in Figure 6. The side portions 214, 216 of the main panel will be push against the instrument panel as shown in Figure 6.

Figure 6 shows the present invention mounted to a motor vehicle's instrument panel with the knee airbag inflated. As inflation gas exits the airbag inflator and begins to fill the knee airbag, the knee airbag begins to inflate in a first direction 250 essentially perpendicular to the bottom of the housing 90 causing the cover 150 to burst along the burst or tear lines, permitting one-half of the top to rotate upward and a lower portion of the top to rotate downward as the knee airbag moves out of the housing. As the knee airbag moves out of the housing because of the placement of the airbag inflator 50 in the knee airbag, the knee airbag will begin to inflate and expand along a second direction 252, perpendicular to the first direction 250. As the knee airbag continues to inflate, the rear panel 64 proximate the instrument panel will become stressed prior to the time the front panel 62, becomes stressed because of the extra fabric 210d that forms the pleat. In the illustrated embodiment the pleat 210d is located between the airbag inflator 50 and the connected regions 70 in the center portion 210 of the knee airbag. With the rear panel of the knee airbag stressed and as the knee airbag continues to inflate, the additional inflation gas entering the knee airbag causes the knee airbag to be urged in a third direction 254 opposite the initial movement 250 of the knee airbag. In the illustrated embodiment this third direction gives the knee airbag a component of motion upwardly and away from the vehicle occupant's legs and helps the knee airbag remain adjacent to the instrument panel rather than assume a trajectory that is more outward and more forcefully directed at the legs of the vehicle occupant.

Figures 5g and 5h show another embodiment of a knee airbag 60a and two steps in the fabrication of an alternate embodiment of the knee airbag 60a. The knee airbag 60a is substantially the same as knee airbag 60 with the exception of the removal of the reinforcement panel 206 on an exterior surface of the knee airbag that functions as a tether. If needed the knee airbag 60a may include a reinforcement panel 206a on an interior surface, opposite where the reinforcement panel 206 was mounted on an exterior surface. In Figure 5e the ends 214a, 216a, of the side portions 214, 216 were moved together, sewn and then the pulled relatively toward end 209. This movement caused the excess fabric 216b to form a pleat under in end of the side portion 216 and also created the opposite pleat 210d in the center portion 210. In this embodiment, the reinforcement panel 206 on an exterior surface of the knee airbag that functions as a tether is not used, however, a pleat that is similar to pleat 210d can be created in the center portion 210 of the knee airbag 60a using the following steps. With reference to Figure 5g, the end of the side portion 216 has been pulled and lifted upward simulating the movement of the side portion 216 toward the position of the tether panel 206 for the assembly of the knee airbag 60. Even though not used in Figure 5g, the reinforcement panel 206 on an exterior surface of the knee airbag that functions as a tether is shown in phantom line. Thereafter, the end 214a of the side portion 214 is moved to the lifted the side portion 216 as, indicated by arrow 215a. Upon the closure of the spacing between of the panel ends 214a, 216a, the pleat 210d is created at the right hand-side of center portion 210. Upon inflation, this knee airbag 60a will display the same tendency as displayed by the knee airbag 60 to inflate as the rear panel is tensioned prior to the front panel having the pleat 210d. The airbag inflator 50 is also shown in Figure 5h.

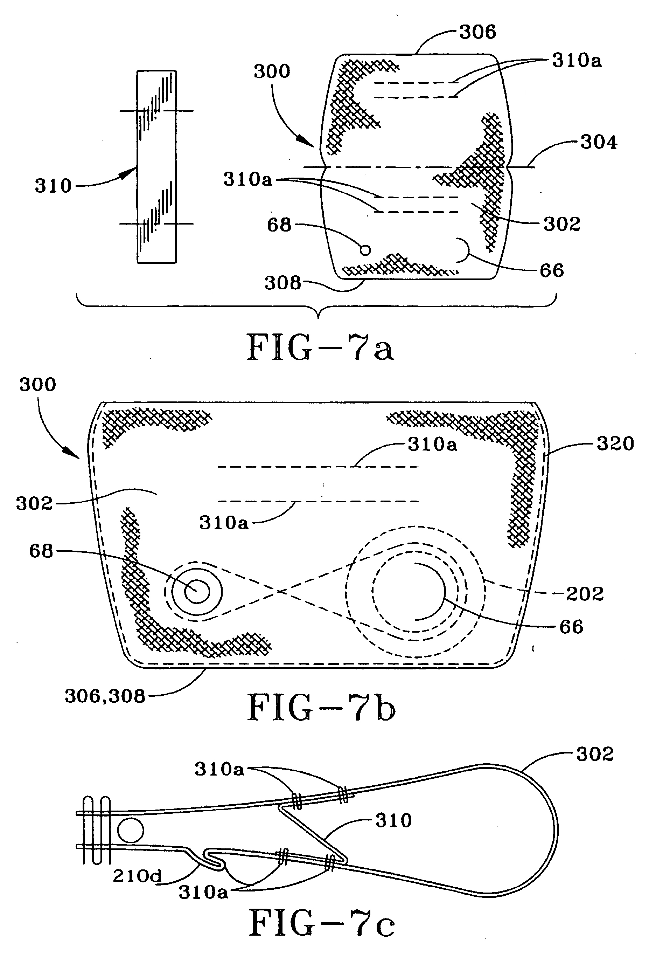

Figures 7a - 7e show an alternate embodiment of a knee airbag 300. Figure 7a shows a main panel 302 with a centerline 304. The knee airbag 300 additionally includes a tether panel 310 that is rectangular in shape. Figure 7a also shows the location of sewn seams 310a, which show where the tether panel 310 is connected to the front and rear panel portions of the main panel 302 in a "Z" configuration as illustrated in Figure 7c. This internally tethered embodiment is a substitute for the sewing the front and rear panels directly together. With the tether panel secured to the main panel at the designated locations of the seams 310a, end 306 is folded over the centerline 304 and aligned with end 308 to yield the configuration shown in Figures 7b and 7c. The main panel 302 includes an arcuate slit 66 and a small opening 68 for receipt of the airbag inflator 50. The folded-over portion of the main panel 302 is sewn to the remaining portion of the main panel along a U shaped seam 320. The airbag inflator 50 is inserted into the knee airbag 300 in the same manner as with the knee airbag 60. The knee airbag 300 and the airbag inflator 50 are similarly mated with the housing. The tether panel 310 can have a configuration of main panel 200 shown in Figure 5 above. The vehicle occupant facing portion or panel of the knee airbag 60a includes a pleat 210d.

## Claims

1. A knee airbag module comprising: a housing (90) formed in the shape of a trough having an open top; an airbag inflator (50) and a knee airbag (60, 60a) are located in the housing, the knee airbag (60, 60a) includes a front panel (62) and a rear panel (64), wherein the front and rear panels (62, 64) are joined together along a seam and the front panel (62) includes fabric (210d) that is pleated, the rear panel receives the airbag inflator (50) and during the inflation of the knee airbag there is a delay between when the rear panel (64) becomes tensioned along the second direction (252) and when the front panel (62) becomes tensioned along the second direction (252), the knee airbag receives inflation gas from the inflator causing the knee airbag (60, 60a) to deploy and move out of the housing (90) in a first direction (250) and to inflate laterally across the top of the housing in a second direction (252), and during the inflation of the knee airbag there is a delay due to the pleat in the front panel, the rear panel becoming tensioned first, causing the knee airbag to move opposite the first direction (250) as the knee airbag continues to be inflated to protect a vehicle occupant's legs; **characterized in that**:
the rear panel and front panel are secured together, other than at the seam, at least at one set of generally opposing locations to restrict the relative expansion of the panels during inflation, by means of regions (70) directly sewn together or by means of a Z-shaped tether (310), wherein the pleat (210d) is located between said airbag inflator and said opposing locations secured together.

2. A knee airbag module according to Claim 1 wherein the front and rear panels (62, 64) are connected by an elongated strap or tether panel (310) having opposing ends, each end connected to one of the rear panel and the front panel, wherein a muddle portion of the elongated strap or tether panel connects each end and wherein the two ends and middle portion are connected to the front and rear panels (62, 64) in a "Z" configuration.

3. A knee airbag module according to Claim 1 wherein the knee airbag (60, 60a) comprises a main panel (200) having a center portion (210) and two side portions (214, 216), the side portions are folded over respective fold lines in the center portion of main panel, the center portion forming a front panel (62) and the two side portions forming a rear panel (64) of the knee airbag.

4. A knee airbag module according to Claim 3 wherein the two folded-over side portions (214, 216) of the main panel (200) are secured to the center portion (210) at one or more seams, the knee airbag including a reinforcement panel (202, 204) that is secured to one of the folded-over side portions (214, 216) and move relative to respective ends (214a, 216a) of the two folded-over side portions (214, 216) of the main panel (200) or at least portions of the two folded-over side portions and form a pleat (210d) from excess fabric in one of the folded-over side portions of the main panel permitting that folded-over side portion to become tensioned after the other folded-over side portion.

5. A knee airbag module according to Claim 1 wherein the housing (90) includes a deformable member (110) having a loop (111) that receives a portion of the airbag Inflator (50) and the loop (111) provides a holding force to secure the airbag inflator to the housing (90).

6. A knee airbag module according to Claim 1 wherein the housing (90) includes tabs (106) and wherein the knee airbag module further includes a cover (150), the cover including depending flanges (156) that are complementary to the tabs (106) wherein at least one opening (158) receives one of the tabs.

7. A knee airbag module according to claim 1 wherein the housing is formed in the shape of a trough (97) having an open mouth or top and four sides (98, 100, 102, 108), one of the sides (108) expending outwardly at an angle between the bottom (104) of said housing and one mounting flange (92), said one side (108) also including a deformable member (110) defined by a thin bendable and resilient loop or partial loop of metal (119) separated from adjacent portions of the housing by a narrow slit (112), wherein the resilient loop receives a portion of the Inflator and is configured to be bent upon rotation of the inflator, the resilient loop configured to create a holding force to secure the inflator to the housing.

## Patentansprüche

1. Knie-Airbagmodul, der aufweist: ein Gehäuse (90), das in der Form einer Wanne mit einer offenen Oberseite ausgebildet ist; einen Airbag-Gasgenerator (50); und einen Knie-Airbag (60, 60a), angeordnet im Gehäuse, wobei der Knie-Airbag (60, 60a) eine vordere Bahn (62) und eine hintere Bahn (64) umfasst, wobei die vordere und die hintere Bahn (62, 64) längs einer Naht miteinander verbunden sind, und wobei die vordere Bahn (62) einen Stoff (210d) umfasst, der gefaltet ist, wobei die hintere Bahn den Airbag-Gasgenerator (50) aufnimmt, und wobei während des Aufblasens des Knie-Airbags eine Verzögerung zwischen dem Zeitpunkt, zu dem die hintere Bahn (64) längs der zweiten Richtung (252) gespannt wird, und dem Zeitpunkt zu verzeichnen ist, zu dem die vordere Bahn (62) längs der zweiten Richtung (252) gespannt wird, wobei der Knie-Airbag Aufblasgas vom Gasgenerator empfängt, wodurch bewirkt wird, dass sich der Knie-Airbag (60, 60a) entfaltet und aus dem Gehäuse (90) heraus in einer ersten Richtung (250) bewegt, und seitlich über die Oberseite des Gehäuses in einer zweiten Richtung (252) aufgeblasen wird, und wobei während des Aufblasens des Knie-Airbags eine Verzögerung infolge der Falte in der vorderen Bahn zu verzeichnen ist, wobei die hintere Bahn zuerst gespannt wird, wodurch bewirkt wird, dass sich der Knie-Airbag entgegengesetzt der ersten Richtung (250) bewegt während der Knie-Airbag weiter aufgeblasen wird, um die Beine eines Fahrzeuginsassen zu schützen, **dadurch gekennzeichnet, dass**:
die hintere Bahn und die vordere Bahn miteinander außer an der Naht gesichert sind, mindestens an einer Reihe von im Allgemeinen entgegengesetzten Stellen, um die relative Expansion der Bahnen während des Aufblasens einzuschränken, mittels von direkt zusammengenähten Bereichen (70) oder mittels einer Z-förmigen Leine (310), wobei die Falte (210d) zwischen dem Airbag-Gasgenerator und den miteinander gesicherten entgegengesetzten Stellen angeordnet ist.

2. Knie-Airbagmodul nach Anspruch 1, bei dem die vordere und die hintere Bahn (62, 64) mittels eines länglichen Riemens oder einer Haltebahn in länglicher Form (310) verbunden sind, die entgegengesetzte Enden aufweisen, wobei ein jedes Ende mit einem von hinterer Bahn und vorderer Bahn verbunden ist, wobei ein mittlerer Abschnitt des länglichen Riemens oder der Haltebahn in länglicher Form jedes Ende verbindet, und wobei die zwei Enden und der mittlere Abschnitt mit der vorderen und der hinteren Bahn (62, 64) in einer "Z"-Konfiguration verbunden sind.

3. Knie-Airbagmodul nach Anspruch 1, bei dem der Knie-Airbag (60, 60a) eine Hauptbahn (200) mit einem mittleren Abschnitt (210) und zwei Seitenabschnitten (214, 216) aufweist, wobei die Seitenabschnitte über jeweilige Faltlinien im mittleren Abschnitt der Hauptbahn gefaltet sind, wobei der mittlere Abschnitt eine vordere Bahn (62) und die zwei Seitenabschnitte eine hintere Bahn (64) des Knie-Airbags bilden.

4. Knie-Airbagmodul nach Anspruch 3, bei dem die zwei umgefalteten Seitenabschnitte (214, 216) der Hauptbahn (200) am mittleren Abschnitt (210) an einer oder mehreren Nähten gesichert sind, wobei der Knie-Airbag eine Verstärkungsbahn (202, 204) umfasst, die an einem der umgefalteten Seitenabschnitte (214, 216) gesichert ist und sich relativ zu den jeweiligen Enden (214a, 216a) der zwei umgefalteten Seitenabschnitte (214, 216) der Hauptbahn (200) oder mindestens relativ zu Abschnitten der zwei umgefalteten Seitenabschnitte bewegt und aus überschüssigem Stoff in einem der umgefalteten Seitenabschnitte der Hauptbahn eine Falte (210d) bildet, wodurch gestattet wird, dass der umgefaltete Seitenabschnitt nach dem anderen umgefalteten Seitenabschnitt gespannt wird.

5. Knie-Airbagmodul nach Anspruch 1, bei dem das Gehäuse (90) ein verformbares Element (110) mit einer Schlinge (111) umfasst, die einen Abschnitt des Airbag-Gasgenerators (50) aufnimmt, und wobei die Schlinge (111) eine Haltekraft liefert, um den Airbag-Gasgenerator am Gehäuse (90) zu sichern.

6. Knie-Airbagmodul nach Anspruch 1, bei dem das Gehäuse (90) Vorsprünge (106) umfasst, und bei dem der Knie-Airbagmodul außerdem eine Abdeckung (150) umfasst, wobei die Abdeckung herabhängende Flansche (156) umfasst, die komplementär zu den Vorsprüngen (106) sind, wobei mindestens eine Öffnung (158) einen der Vorsprünge aufnimmt.

7. Knie-Airbagmodul nach Anspruch 1, bei dem das Gehäuse in der Form einer Wanne (97) mit einer offenen Öffnung oder Oberseite und vier Seiten (98, 100, 102, 108) geformt ist, wobei sich eine der Seiten (108) nach außen unter einem Winkel zwischen dem Boden (104) des Gehäuses und einem Montageflansch (92) erstreckt, wobei die eine Seite (108) ebenfalls ein verformbares Element (110) umfasst, das durch eine dünne biegbare und elastische Schlinge oder Teilschlinge aus Metall (111) definiert wird, getrennt von den benachbarten Abschnitten des Gehäuses durch einen schmalen Schlitz (112), wobei die elastische Schlinge einen Abschnitt des Gasgenerators aufnimmt und ausgebildet ist, um sich bei Drehung des Gasgenerators zu biegen, wobei die elastische Schlinge ausgebildet ist, um eine Haltekraft zu erzeugen, um den Gasgenerator am Gehäuse zu sichern.

## Revendications

1. Module de coussin gonflable de protection des genoux, comprenant : un boîtier (90) ayant une forme en auge, comportant une partie supérieure ouverte ; un dispositif de gonflement du coussin gonflable (50) et un coussin gonflable de protection des genoux (60, 60a) agencés dans le boîtier, le coussin gonflable de protection des genoux (60, 60a) englobant un panneau avant (62) et un panneau arrière (64), les panneaux avant et arrière (62, 64) étant reliés le long d'une couture et le panneau avant (62) englobant un tissu (210d) plissé, le panneau arrière recevant le dispositif de gonflement du coussin gonflable (50), un délai étant établi, au cours du gonflement du coussin gonflable de protection des genoux, entre la tension du panneau arrière (64) le long de la deuxième direction (252) et la tension du panneau avant (62) le long de la deuxième direction (252), le coussin gonflable de protection des genoux recevant du gaz de gonflement du dispositif de gonflement, entraînant le déploiement du coussin gonflable de protection des genoux (60, 60a) et son déplacement hors du boîtier (90) dans une première direction (250), et étant gonflé latéralement à travers la partie supérieure du boîtier dans une deuxième direction (252), un délai étant établi, au cours du gonflement du coussin gonflable de protection des genoux, dû à la partie plissée dans le panneau avant, le panneau arrière étant tendu en premier lieu, entraînant le déplacement du coussin gonflable de protection des genoux dans une direction opposée à la première direction (250) lors de la poursuite du gonflement du le coussin gonflable de protection des genoux, en vue de protéger les jambes d'un occupant du véhicule, **caractérisé en ce que** :
le panneau arrière et le panneau avant sont fixés l'un à l'autre, en un endroit autre que la couture, au moins au niveau d'un groupe d'emplacements généralement opposés, pour limiter l'expansion relative des panneaux au cours du gonflement, par l'intermédiaire de régions (70) assemblées directement par couture ou par l'intermédiaire d'une attache en forme de Z (310), dans lequel la partie plissée (210d) est agencée entre ledit dispositif de gonflement du coussin gonflable et lesdits emplacements opposés fixés les uns aux autres.

2. Module de coussin gonflable de protection des genoux selon la revendication 1, dans lequel les panneaux avant et arrière (62, 64) sont connectés par une sangle allongée ou un panneau d'attache allongé (310), comportant des extrémités opposées, chaque extrémité étant connecté à un panneau, au panneau arrière ou au panneau avant, dans lequel une partie centrale de la sangle allongée ou du panneau d'attache allongé connecte chaque extrémité, les deux extrémités et la partie centrale étant connectées aux panneaux avant et arrière (62, 64) dans une configuration en « Z ».

3. Module de coussin gonflable de protection des genoux selon la revendication 1, dans lequel le coussin gonflable de protection des genoux (60, 60a) comprend un panneau principal (200), comportant une partie centrale (210) et deux parties latérales (214, 216), les parties latérales étant repliées au-dessus de lignes de pliage respectives dans la partie centrale du panneau principal, la partie centrale formant un panneau avant (62) et les deux parties latérales formant un panneau arrière (64) du coussin gonflable de protection des genoux.

4. Module de coussin gonflable de protection des genoux selon la revendication 3, dans lequel les deux parties latérales repliées (214, 216) du panneau principal (200) sont fixées sur la partie centrale (210) au niveau d'une ou de plusieurs coutures, le coussin gonflable de protection des genoux englobant un panneau de renforcement (202, 204) fixé sur une des parties latérales repliées (214, 216) et se déplaçant par rapport aux extrémités respectives (214a, 216a) des deux parties latérales repliées (214, 216) du panneau principal (200) ou au moins par rapport à des parties des deux parties latérales repliées et formant une partie plissée (210d) à partir de tissu excédentaire dans une des parties latérales repliées du panneau principal, permettant la tension de cette partie latérale repliée après l'autre partie latérale repliée.

5. Module de coussin gonflable de protection des genoux selon la revendication 1, dans lequel le boîtier (90) englobe un élément déformable (110) comportant une boucle (111) recevant une partie du dispositif de gonflement du coussin gonflable (50), la boucle (111) établissant une force de retenue pour fixer le dispositif de gonflement du coussin gonflable sur le boîtier (90).

6. Module de coussin gonflable de protection des genoux selon la revendication 1, dans lequel le boîtier (90) englobe des pattes (106), le module de coussin gonflable englobant en outre un couvercle (150), le couvercle englobant de brides pendantes (156), complémentaires des pattes (106), au moins une ouverture (158) recevant une des pattes.

7. Module de coussin gonflable de protection des genoux selon la revendication 1, dans lequel le boîtier a une forme en auge (97), comportant une embouchure ou une partie supérieure ouverte et quatre côtés (98, 100, 102, 108), un des côtés (108) s'étendant vers l'extérieur à un angle entre la partie inférieure (104) dudit boîtier et une bride de montage (92), ledit un côté (108) englobant aussi un élément déformable (110), défini par une fine boucle à fléchissement et élastique ou une boucle partielle en métal (111), séparée des parties adjacentes du boîtier par une fente étroite (112), la boucle élastique recevant une partie du dispositif de gonflement et étant configurée de sorte à se fléchir lors de la rotation du dispositif de gonflement, la boucle élastique étant configurée de sorte à établir une force de retenue pour fixer le dispositif de gonflement sur le boîtier.
